# EUROPEAN PATENT APPLICATION

(11) **EP 2 624 546 A1**
(43) Date of publication of application: **07.08.2013**
(21) Application number: 13164595.4
(22) Date of filing: 19.02.2009
(51) Int. Cl.: H04N 7/16, H04N 7/24, H04N 21/41, H04N 21/418, H04N 21/4363, H04N 21/45, H04N 21/4788, H04N 5/44

(54) **Apparatus and methods for controlling an entertainment device using a mobile communication device**

(30) Priority: 12.03.2008 US 46555; 12.03.2008 US 46568
(62) Divisional of application: 09720027.3
(71) Applicant: EchoStar Technologies Corporation, Englewood, CO 80112 (US); Dish Network, L.L.C., Englewood, Colorado 80112 (US)
(72) Inventor: The designation of the inventor has not yet been filed
(74) Representative: Sadler, Peter Frederick

(57) **Abstract**

A method is provided for outputting locked presentation content by an entertainment device. User input is received, at the entertainment device, from a mobile communication device, the user input requesting output of locked presentation content by the entertainment device, the locked presentation content being accessible on a per-user basis. Identifying data is received, at the entertainment device, from the mobile communication device, the identifying data regarding a user of the mobile communication device. The user is authenticated, at the entertainment device, to access the locked presentation content of the entertainment device, based on the identifying data, and the locked presentation content is output for presentation on a presentation device, based on the user input, responsive to authenticating the user. A corresponding entertainment device and mobile communication device are also provided.

## Description

### Background

The average home presently includes a variety of entertainment devices, each remotely operated by a separate remote control. Therefore, a user often needs to keep track of multiple remote controls while experiencing audio and/or video content. This has been a problem for many users, and modem video viewing systems have become so complex that many users cannot navigate the controls of entertainment devices without the assistance of the associated remote controls. However, because remote controls are easily misplaced, it becomes difficult for users to navigate their video viewing systems without the assistance of advanced navigation tools provided by remote controls.

### Summary

The invention is defined in the independent claims, to which reference is now directed. Preferred features are set out in the dependent claims.

A method is provided for outputting locked presentation content by an entertainment device. User input is received, at the entertainment device, from a mobile communication device, the user input requesting output of locked presentation content by the entertainment device, the locked presentation content being accessible on a per-user basis. Identifying data is received, at the entertainment device, from the mobile communication device, the identifying data regarding a user of the mobile communication device. The user is authenticated, at the entertainment device, to access the locked presentation content of the entertainment device, based on the identifying data, and the locked presentation content is output for presentation on a presentation device, based on the user input, responsive to authenticating the user.

A corresponding entertainment device is provided comprising an input module that receives locked presentation content from at least one content source, the locked presentation content being accessible on a per-user basis, an interface module and a processor. The interface module wirelessly communicates with a mobile communication device to receive user input and identifying data, the user input requesting access to the locked presentation content and the identifying data regarding a user of the mobile communication device. The processor is communicatively coupled to the input module and the interface module and authenticates the user based on the identifying data and further outputs the locked presentation content for presentation on a presentation device, based on the user input, responsive to authenticating the user.

A corresponding mobile communication device is provided, comprising an input device that receives user input requesting playback of locked presentation content available for output by an entertainment device, the locked presentation content being accessible on a per-user basis. The mobile communication device further comprises a storage medium that stores identifying data regarding a user of the mobile communication device; a processor communicatively coupled to the input device and communicatively coupled to the storage medium that translates the user input and the identifying data into a command compatible with the entertainment device; and a wireless transmitter that transmits the command to the entertainment device wherein the entertainment device utilizes the command to authenticate the user and output the locked presentation content for presentation on a presentation device.

### Brief Description of the Drawings

The same number represents the same element or same type of element in all drawings.

FIG. 1 illustrates an embodiment of an entertainment system.

FIG. 2 illustrates an embodiment of a communication system.

FIG. 3 illustrates an embodiment of a communication system.

FIG. 4 illustrates an embodiment of a mobile communication device of FIG. 2.

FIG. 5 illustrates an exemplary embodiment of a mobile communication device of FIG. 2.

FIG. 6 illustrates an embodiment of a mobile communication device of FIG. 3.

FIG. 7 illustrates an embodiment of an entertainment device of FIG. 3.

FIG. 8 illustrates an embodiment of a process for remotely operating an entertainment device.

FIG. 9 illustrates an embodiment of a process for presenting content on a display device.

FIG. 10 illustrates an embodiment of a process for populating a social networking profile of a user based on viewing data.

FIG. 11 illustrates an embodiment of a process for collecting demographic information regarding video programming.

FIG. 12 illustrates an embodiment of a process for outputting presentation content by an entertainment device.

FIG. 13 illustrates an embodiment of a process for outputting locked presentation content by an entertainment device.

### Detailed Description

The various embodiments described herein generally provide apparatus, systems and methods which facilitate the reception, processing, outputting and communication of content from one or more sources, via one or more communication mediums (or networks), to one or more communication devices for presentation to one or more end-users. More particularly, the various embodiments described herein generally provide apparatus, systems and methods which facilitate controlling the presentation of content by entertainment devices using a mobile communication device. In short, the various embodiments described provide apparatus, systems and/or methods in which a mobile communication device is utilized to remotely control an entertainment device.

In at least one embodiment, the content to be received, processed, outputted and/or communicated may come in any of various forms including, but not limited to, audio, video, data, information, or otherwise. Likewise, the entertainment device to be controlled may comprise any device capable of presenting audio, video and/or audio/video (A/V) content. It is to be appreciated that content may be provided from any source, such as an over-the-air broadcast, a satellite or cable television distribution system, a digital video disk (DVD) or other optical disk, the internet or other communication networks and the like.

A user utilizes a mobile communication device (e.g., a mobile telephone, personal digital assistant (PDA) and the like) to wirelessly control the output and presentation of content by the entertainment device. In other words, the mobile communication device operates as a remote control for the entertainment device. The user inputs commands into the mobile communication device and the commands are transmitted to the entertainment device. The entertainment device responsively processes the commands and manipulates the output of presentation content accordingly. In at least one embodiment, the mobile communication device transmits identifying data regarding the user to the entertainment device which is used to authenticate the user on the entertainment device or other devices communicatively coupled to the entertainment device. Thus, the user is not repeatedly required to manually enter identifying information, such as a personal-identification number (PIN), usemame/password, access code and the like in order to access content presented by the entertainment device.

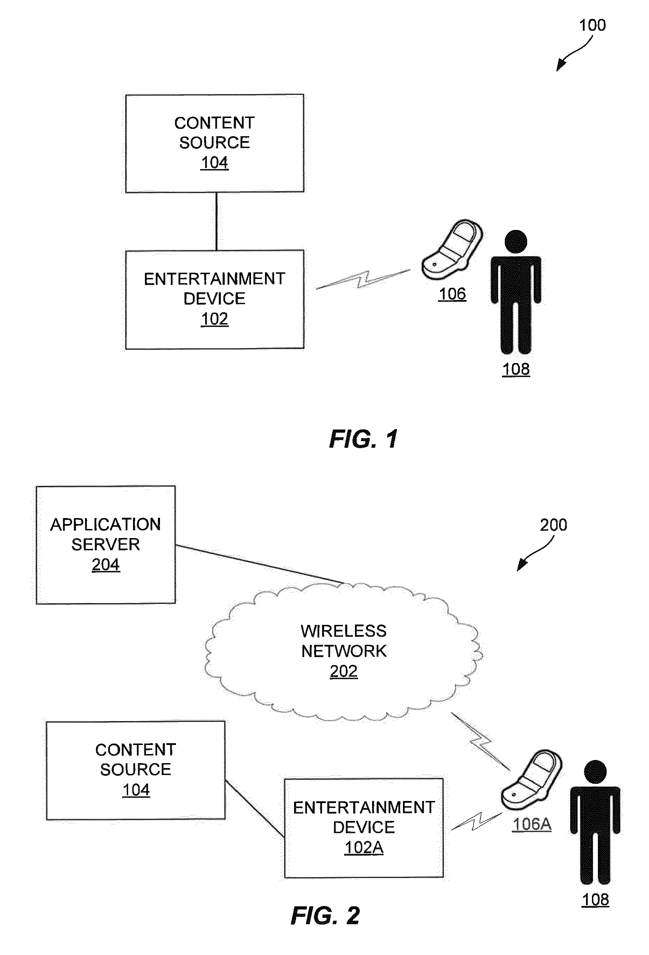

FIG. 1 illustrates an embodiment of an entertainment system 100. The entertainment system 100 presents content to a user 108. In at least one embodiment, the content presented to the user 108 includes a video stream, such as a television program, movie or other recorded content and the like. The entertainment system 100 includes an entertainment device 102, a content source 104 and a mobile communication device 106. Each of these components is discussed in greater detail below. The entertainment system 100 may include other devices, components or elements not illustrated for the sake of brevity.

The entertainment device 102 is operable to receive content from one or more content source(s) 104, and to present the received content to the user 108. In at least one embodiment, the entertainment device 102 is a display device configured to display content to the user 108. The entertainment device 102 may receive a video stream in any format (e.g., analog or digital format), and present the video stream to the user 108. The entertainment device 102 may be further configured to display menus and other information that allow a user 108 to control the presentation of content by the entertainment device 102. In other embodiments, the entertainment device 102 is a set-top box (e.g., a satellite or cable television converter box), digital video recorder (DVR) or other similar device that processes and provides one or more audio and/or video output streams to a display device for presentation to the user 108. It is to be appreciated that the entertainment device 102 may also be embodied as an apparatus combining the functionality of a display device and a set-top box, digital video recorder (DVR) or the like.

The content source 104 may comprise any system or apparatus configured to provide presentation data, such as a video stream, to the entertainment device 102. The content source 104 may be external or internal to the entertainment device 102. The entertainment device 102 and the content source 104 may be communicatively coupled through any type of wired or wireless connection, communication network and the like. Exemplary content sources include television distribution systems (e.g., over-the-air distribution systems, cable television distribution systems, satellite television distribution systems and broadband distribution systems), DVD players and other optical disk players, digital storage mediums (e.g., DVRs) and the internet.

The mobile communication device 106 may comprise any system or apparatus configured to provide communication services to the user 108. The communication services provided by the mobile communication device 106 may comprise voice, data and/or video services. The mobile communication device 106 may communicate using any type of communication medium or protocol. For example, the mobile communication device 106 may wirelessly communicate with a communication network (not shown in FIG. 1) over a radio frequency (RF) communication link. In at least one embodiment, the mobile communication device 106 is a wireless telephone that communicates over a cellular network.

The mobile communication device 106 is further configured to wirelessly communicate with the entertainment device 102. The mobile communication device 106 and the entertainment device 102 may communicate over any type of wireless communication link, such as an RF or infrared (IR) communication link. More particularly, the mobile communication device 106 receives user input requesting to control the presentation of content by the entertainment device, and transmits the user input to the entertainment device 102 for processing. Responsive to receiving the user input and/or other information from the mobile communication device 106, the entertainment device 102 modifies the presentation of the content by the entertainment device 102.

FIG. 2 illustrates an embodiment of a communication system 200. The communication system 200 is configured to present content to the user 108. The communication system 200 includes an entertainment device 102A, a content source 104, a mobile communication device 106A, a wireless network 202 and an application server 204. Each of these components is discussed in greater detail below. The description of components common to FIG. 1 is omitted herein for the sake of brevity. Further, the communication system 200 may include other components, devices or elements not illustrated for the sake of brevity.

The mobile communication device 106A is configured to wirelessly communicate with an application server 204 through the wireless network 202. In at least one embodiment, the mobile communication device 106A receives data from the entertainment device 102A, and transmits the data to the application server 204 through the wireless network 202. The entertainment device 102A may provide the mobile communication device 106A with any type of data for transmission to the application server 204. Exemplary data transmitted from the entertainment device 102A to the application server 204 includes pay-per-view (PPV) ordering information, error and diagnostic reports regarding the entertainment device, interactive television information (e.g., user responses to on-screen prompts), demographic information, audio and video chat data, survey data and user generated content. In at least one embodiment, the application server 204 may also transmit data to the entertainment device 102A through the mobile communication device 106A. For example, the application server 204 may provide the entertainment device 102A with buddy lists, social networking profiles, programming guides, video programming, updated firmware and the like.

Application server 204 is operable for receiving, generating and communicating content by and between entertainment device 102A and other systems and devices. In at least one embodiment, the application server 204 is operable for receiving authentication requests, health and diagnostic reports, pay-per-view (PPV) ordering information, demographic information, social networking profile updates and the like from the entertainment device 102A and further processing the received data according to desired design criteria. For example, an authentication request may be received from the entertainment device 102A requesting access for a user to locked presentation content, such as a PPV movie. PPV ordering information received from the entertainment device 102A, whether as part of an authentication request or part of aggregated information from a set-top box, may be utilized for generating a bill for the user 108. Health and diagnostic information may be used to identify problems with the entertainment device 102A, either individually or across an entire product line. In at least one embodiment, the application server 204 may transmit firmware or software updates to the entertainment device 102A responsive to processing the health and diagnostic information.

In at least one embodiment, the application server 204 is operable for receiving demographic information from the entertainment device 102A through the mobile communication device 106A. The generation of the demographic information is described in further detail below. In some embodiments, the application server 204 receives and processes data received from the entertainment device 102A, and responsively populates and/or updates buddy lists, social networking profiles and the like related to the user 108. It is to be appreciated that the mobile communication device 106A may act as a backchannel for any type of data transmitted from the entertainment device 102A to the application server 204, depending on desired design criteria.

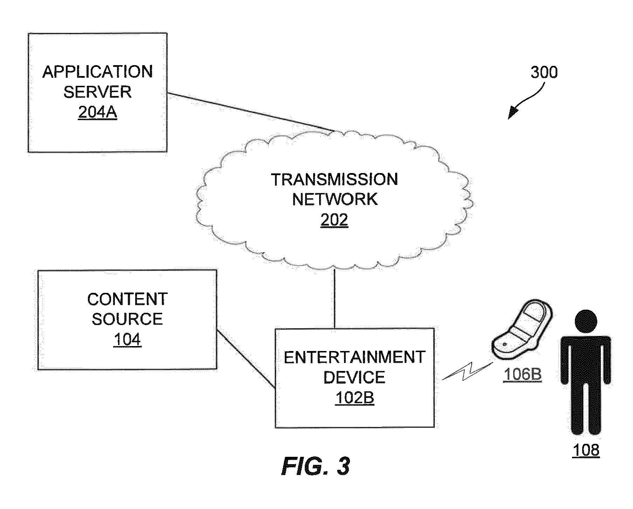

FIG. 3 illustrates an embodiment of a communication system 300. The communication system 300 is configured to present content to the user 108. The content communication system 300 includes an entertainment device 102B, a content source 104, a mobile communication device 106B, a transmission network 302 and an application server 204A. Each of these components is discussed in greater detail below. The description of components common to FIGS. 1-2 is omitted herein for the sake of brevity. Further, the communication system 300 may include other components, devices or elements not illustrated for the sake of brevity.

The entertainment device 102B is configured to communicate with the application server 204A through the transmission network 302. In at least one embodiment, the entertainment device 102B and the application server 204A communicate over an internet connection or other type of local area network (LAN) or wide area network (WAN). In at least one embodiment, the application server 204A may also transmit data to the mobile communication device 106B through the entertainment device 102B. For example, the application server 204A may provide the entertainment device 102B with buddy lists, social networking profiles, programming guides, video programming and the like which are further transmitted to the mobile communication device 106B and presented to the user on the mobile communication device 106B.

As described above, the mobile communication device 106B operates to remotely control the entertainment device 102B. More particularly, the mobile communication device 106B operates to provide commands, responsive to input from the user 108, that manipulate the output of content by the entertainment device 102B. In at least one embodiment, the presentation content presented by the entertainment device 102B is locked and only accessible to the user 108 upon authentication. For example, specified channels of a television broadcast service may only be accessible by a parent or other designated users. Thus, the entertainment device 102B only presents the "locked" or "restricted" content upon determining that an authorized user is requesting the content.

The entertainment device 102B authenticates a user based on information provided by the mobile communication device 106B. In at least one embodiment, the mobile communication device 106B transmits identifying data regarding a user to the entertainment device 102B with every command transmitted to the entertainment device 102B. In other embodiments, the mobile communication device 106B transmits the identifying data to the entertainment device 102B upon transmission of only specified commands. For example, the mobile communication device 106B may transmit the identifying data with commands that request to change the content presented by the entertainment device 102B such a power-on commands, channel change commands, commands selecting to view recorded videos and commands to purchase content. Thus, the mobile communication device 106B may not transmit the identifying data to the entertainment device 102B with commands that do not change the content presented by the entertainment device 102B, such as mute or volume change commands, trick play mode commands, power-off commands and the like. In at least one embodiment, the mobile communication device 106B transmits the identifying data to the entertainment device 102B responsive to a query. In other words, the entertainment device 102B determines when the identifying data is needed to authenticate the user responsive to a command, and queries the mobile communication device 106B for the identifying data automatically without user intervention.

The entertainment device 102B may be remotely controlled by multiple users each utilizing their own mobile communication device 106B. By receiving identifying data from the mobile communication device 106B, the entertainment device 102B becomes aware of which individual is actually watching the content. The entertainment device 102B can thus implement various functions which typically require identifying a user 108, without requiring the user 108 to repeatedly manually provide identifying information.

As discussed above, the entertainment device 102B may control access to certain types of content depending on which user 108 utilizes their personal mobile communication device 106B to input a command to the entertainment device 102B. Thus, parents may lock specific channels, specific types of pay-per-view (PPV) or video-on-demand (VOD) content, recorded or stored content which can only be accessed using the parent's mobile communication device 106B. For example, when a child utilizes their own mobile communication device 106B to access the content of the entertainment device 102B, they will be restricted from accessing the locked content because the entertainment device 102B will not authenticate the child based on the identifying data provided by the mobile communication device 106B.

In at least one embodiment, user accounts with usage timers may be provided on the entertainment device 102B that are accessed based on the identifying data provided by the mobile communication device 106B. For example, the user 108 (e.g., a child) may be restricted to experiencing 1 hour of content per day, 12 hours per week or 60 hours per month. Thus, as the user 108 experiences content, their associated time budget is decremented based on the time spent experiencing the content. When the user 108 powers on the entertainment device 102B with a command from the mobile communication device 106B, the entertainment device 102B authenticates the user 108 based on the identifying data provided by the mobile communication device 106B and begins decrementing the time budget for the user 108. If the user 108 exceeds the time budget for the specified time period, then the entertainment device 102B restricts further access to content. For example, the entertainment device 102B may power-off or cease the output of the presentation content to the user 108. The identifying data provided to the entertainment device 102B by the mobile communication device 106B may also be utilized in communications between the entertainment device 102B and a remote server or device.

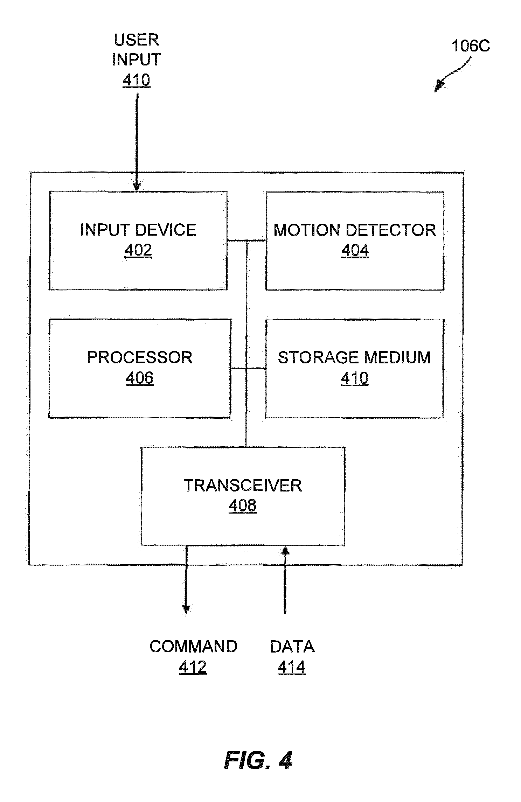

FIG. 4 illustrates an embodiment of a mobile communication device 106C of FIG. 2. FIG. 4 will be discussed in reference to the communication system 200 illustrated in FIG. 2. The mobile communication device 106C includes an input device 402, a motion detector 404, a processor 406, a transceiver 408 and a storage medium 410. Each of these components is discussed in greater detail below. The mobile communication device 106C may include other components, devices or elements not illustrated for the sake of brevity.

The input device 402 is operable for receiving user input 410 from the user 108 (see FIG. 2). In at least one embodiment, the input device 402 is a keypad typically found on wireless telephones. A user may utilize the keypad to input channel numbers, control the volume of the entertainment device 102 (see FIG. 2), navigate menus and/or control other functions of the entertainment device 102. In at least one embodiment, the input device 402 comprises a touch screen that displays a virtual remote control. In other words, the input device 402 displays on screen an image of a remote control utilized to remotely operate the entertainment device 102 (see FIG. 2). The details of the virtual remote control will be discussed in greater detail below.

The storage medium 410 stores identifying data regarding the user 108 (see FIG. 2) of the mobile communication device 106C. The storage medium 410 may comprise any type of non-volatile storage medium, such as internal or removable flash memory and other types of memory cards. Exemplary identifying data regarding the user 108 (see FIG. 2) includes a personal identification number, usemame and/or password, access code or phone number. It will be appreciated that any type of identifying data may be utilized by the entertainment device 102A (see FIG. 2) to authenticate the user 108.

The motion detector 404 is operable for determining positional information regarding the mobile communication device 106C. The positional information is utilized to generate commands for the entertainment device 102 (see FIG. 2). Exemplary motion detector devices include mechanical switches, gyroscopes and accelerometers. Motion detectors may be utilized that detect motion, vibration or acceleration among any number of axis. For example, a three element accelerometer may be utilized for detecting accelerations along an x, y and z axis.

In at least one embodiment, the entertainment device 102 may include a sensor bar that emanates multiple light sources. For example, the sensor bar may be mounted in a stationary position near the entertainment device 102 (see FIG. 2). The motion detector 404 is operable to detect and measure the intensity and size of the light sources. Responsive to measuring the intensity and size of the light sources, the motion detector 404 performs mathematical operations to determine the coordinates (e.g., positional information) of the mobile communication device 106C. The positional information, including coordinates of the mobile communication device 106C and/or the direction of movement may be utilized to determine the coordinates of a cursor outputted for presentation by the entertainment device 102.

The processor 406 is operable for generating commands that are compatible with the entertainment device 102 (see FIG. 2). The processor 406 receives the user input 410 from the input device 402 and the positional information from the motion detector 404 and translates the user input 410, the positional information and/or the identifying data from the storage medium 404 into a command 412. In at least one embodiment, the processor 406 customizes the appearance of a virtual remote control displayed on the input device 402. For example, the buttons of the virtual remote control displayed by a touch screen of the input device 402 may be customized based on a particular menu displayed on screen by the entertainment device 102. In some embodiments, the processor 406 controls the transmission of data from the entertainment device 102 (see FIG. 2) to the application server 204.

The transceiver 408 is operable for wirelessly transmitting data, such as the command 412, to the entertainment device 102. The transceiver 408 is also operable for receiving the data 414 from the entertainment device 102 and further transmitting the data 414 to other devices, such as the application server 204. While the transceiver 408 is described as having bi-directional transmission capability, it is to be appreciated that mobile communication device 106C may alternatively include a wireless transmitter providing transmission only capability. The transceiver 408 may operate using any type of IR or RF communication link, including WiFi, Bluetooth, cellular communication and the like. In at least one embodiment, the transceiver 408 is operable for transmitting data across multiple types of communication links. For example, the transceiver 408 may receive the data 414 from the entertainment device 102 (see FIG. 2) over a WiFi link, and may reformat the data 414 for transmission to the application server 204 over the wireless network 202. In some embodiments, the mobile communication device 106C may include multiple transceivers, transmitters and/or receivers capable of handling reception and/or transmission across multiple types of communication links.

Those of ordinary skill in the art will appreciate that the various functional elements 402 through 408 shown as operable within the mobile communication device 106C may be combined into fewer discrete elements or may be broken up into a larger number of discrete functional elements as a matter of design choice. Thus, the particular functional decomposition suggested by FIG. 4 is intended merely as exemplary of one possible functional decomposition of elements within the mobile communication device 106C.

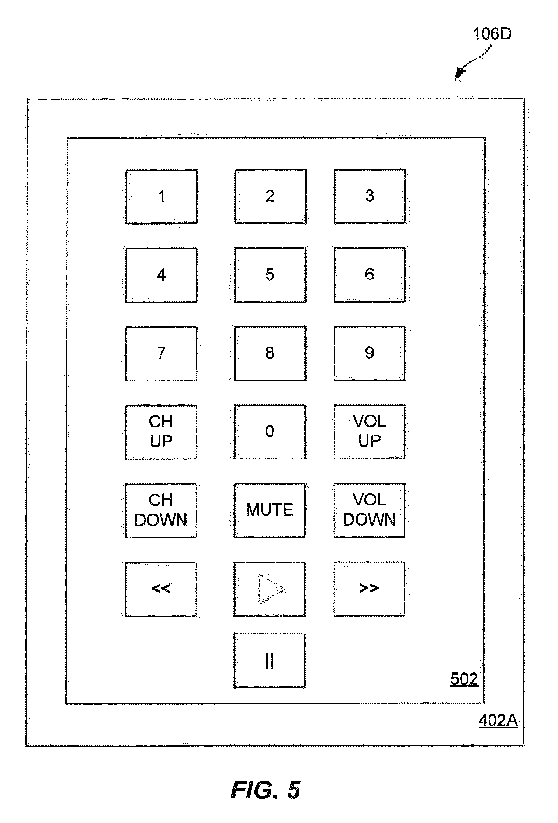

FIG. 5 illustrates an exemplary embodiment of a mobile communication device 106D of FIG. 2. More particularly, FIG. 5 illustrates an embodiment of a virtual remote control 502 displayed on a touch screen of an input device 402A. The virtual remote control 502 is operable for emulating the remote control for the entertainment device 102 (see FIG. 2). As illustrated in FIG. 5, the virtual remote control 502 displays frequently used buttons/functions of a television receiver with an integrated DVR. Thus, a user can control the channels, volume or playback of video content outputted by the entertainment device 102. It is to be appreciated that the functions/buttons presented by the virtual remote control 502 may vary depending on the functionality of the entertainment device 102 to be controlled.

In at least one embodiment, the virtual remote control 502 is downloaded by the mobile communication device 106D from the entertainment device 102 (see FIG. 2). For example, the mobile communication device 106D may download the virtual remote control 502 during a set-up process of the mobile communication device 106D. In other embodiments, the entertainment device 102 may transmit an updated virtual remote control 502 depending on a particular menu displayed by the entertainment device 102, or a particular functionality presently enabled on the entertainment device 102. For example, if the user 108 is presently viewing an electronic programming guide (EPG) on the entertainment device 102, then the virtual remote control 502 may be customized to emulate the EPG, allowing the user to touch a particular region of the input device 302 to select a program to watch. In other embodiments, the functions/buttons displayed by the virtual remote control 502 may vary depending on whether the user 108 is utilizing the television receiver or the DVR functionality of the entertainment device 102. For example, the mobile communication device 106D may store multiple virtual remote control 502 layouts and receive menu information from the entertainment device 102 (see FIG. 2) indicating the particular menu presently outputted for display. Responsive to receiving the menu information, the mobile communication device 106D selects and presents the appropriate virtual remote control 502 layout to the user 108.

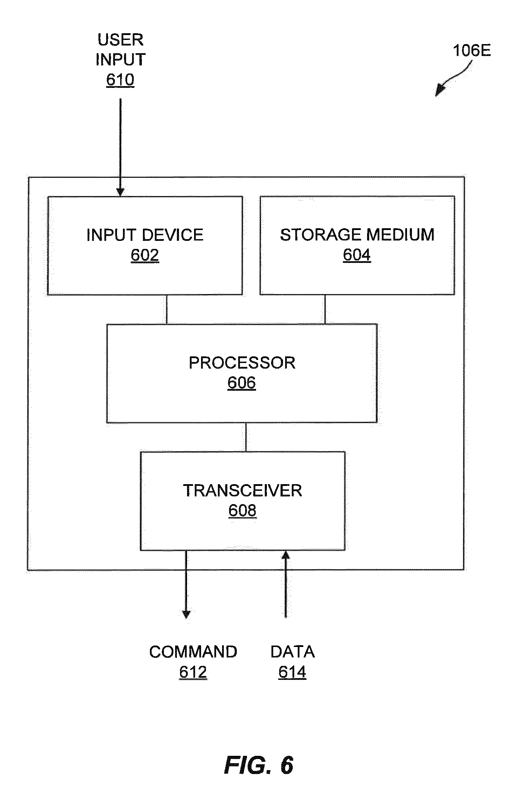

FIG. 6 illustrates an embodiment of a mobile communication device 106E of FIG. 3. FIG. 6 will be discussed in reference to the communication system 300 illustrated in FIG. 23 The mobile communication device 106B includes an input device 602, a storage medium 604, a processor 606 and a transceiver 608. Each of these components is discussed in greater detail below. The mobile communication device 106B may include other components, devices or elements not illustrated for the sake of brevity.

The input device 602 is operable for receiving user input 610 from the user 108 (see FIG. 2) and may be similar to the input device 402. The storage medium 604 stores identifying data regarding the user 108 (see FIG. 3) of the mobile communication device 106B and may be similar to the storage medium 404 (see FIG. 4). The processor 606 is operable for generating commands that are compatible with the entertainment device 102 (see FIG. 2). The processor 606 receives the user input 610 from the input device 602 and translates the user input 610 and/or the identifying data into the command 612. The identifying data may be included in the command 612 or may be provided to the entertainment device 102 separately responsive to a query.

The transceiver 608 is operable for wirelessly transmitting data, such as the command 612, to the entertainment device 102. The transceiver 608 is also operable for receiving the data 614 from the entertainment device 102 and further transmitting the data 614 to other devices, such as the application server 204. While the transceiver 608 is described as having bi-directional transmission capability, it is to be appreciated that mobile communication device 106B may alternatively include a wireless transmitter providing transmission only capability. The transceiver 608 may operate using any type of IR or RF communication link, including WiFi, Bluetooth, cellular communication and the like. In at least one embodiment, the transceiver 608 is operable for transmitting data across multiple types of communication links. For example, the transceiver 608 may receive the data 614 from the entertainment device 102 (see FIG. 2) over a WiFi link, and may reformat the data 614 for transmission to the application server 204 over the wireless network 602. In some embodiments, the mobile communication device 106B may include multiple transceivers, transmitters and/or receivers capable of handling reception and/or transmission across multiple types of communication links.

Those of ordinary skill in the art will appreciate that the various functional elements 602 through 608 shown as operable within the mobile communication device 106E may be combined into fewer discrete elements or may be broken up into a larger number of discrete functional elements as a matter of design choice. Thus, the particular functional decomposition suggested by FIG. 6 is intended merely as exemplary of one possible functional decomposition of elements within the mobile communication device 106E.

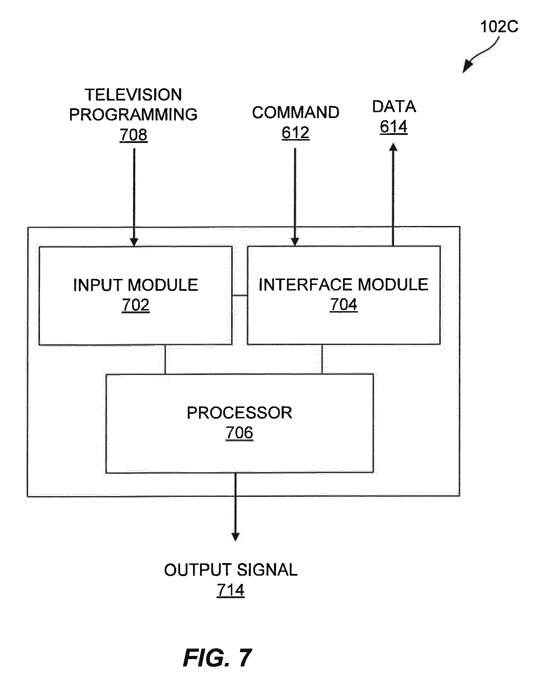

FIG. 7 illustrates an embodiment of an entertainment device 102C of FIG. 3. More particularly, FIG. 7 illustrates an entertainment device 102C embodied as a television receiver (e.g., a set-top box). However, it is to be appreciated that the entertainment device 102 may comprise any type of device that presents any type of presentation content. The entertainment device 102C includes an input module 702, an interface module 704 and a processor 706. Each of these components is discussed in greater detail below. The entertainment device 102C may include other components, devices or elements not illustrated for the sake of brevity.

The input module 702 is operable for receiving presentation content, e.g., television programming 708. The input module 702 may be operable for receiving and tuning any type of television programming 708. For example, the input module 702 may receive an over-the-air distribution broadcast, a direct broadcast satellite signal or a cable television signal. In at least one embodiment, the input module 702 may receive or retrieve content from a storage medium, such as an optical disk, internal or external hard drives, portable storage devices (e.g., universal serial bus (USB) memory sticks) and the like. The input module 702 may also receive content from external servers, such as video servers, that are communicatively coupled over the internet or other types of data networks. In at least one embodiment, the television programming 708 may be locked and thus accessible upon proper authentication of the user 108 (see FIG. 3).

The interface module 704 is operable to wirelessly receive and/or transmit data to the mobile communication device 106 (see FIG. 3). The interface module 704 may communicate with the mobile communication device 106A utilizing any type of IR or RF communication link. In at least one embodiment, the interface module 704 receives the command 612 from the mobile communication device 106, and responsively provides the command 612 to the processor 706. The interface module 704 may receive identifying data regarding the user 108 (see FIG. 3) from the mobile communication device 106 as part of the command 612 or as a separate data transmission (e.g., responsive to a query). In some embodiments, the interface module 704 receives the data 614 and responsively transmits the data 614 to the mobile communication device 106 for transmission to the application server 204.

The processor 706 is operable for controlling the operation of the entertainment device 102 (see FIG. 3). In at least one embodiment, the processor 706 receives the television programming 708 and responsively generates an output signal 714 for presentation on a display device. The processor 706 is further operable to receive the command 612 and manipulate the playback of the television programming 708 responsive to the command. In other words, the processor 706 operates responsive to the command 612 to control the output signal 714. In at least one embodiment, the output signal 714 may be generated responsive to authenticating the user 108 based on the identifying data. In some embodiments, the identifying data may be used by the processor 706 to identify the user 108 and perform other functions that generate data transmitted to external sources.

The processor 706 may be operable to generate data 614 that is transmitted to the application server 204 (see FIG. 3) through the mobile communication device 106. For example, the processor 706 may collect health and diagnostic information regarding the entertainment device 102C or pay-per-view ordering information that is transmitted to the application server 204. In at least one embodiment, the processor 706 generates demographic information based on the television programming 708, the command 612 and the identifying data regarding the user 108. The demographic information is then transmitted to the application server 204. The processor 706 may also utilize the collected information to update social networking profiles, buddy lists and other information regarding the user 108.

Those of ordinary skill in the art will appreciate that the various functional elements 702 through 706 shown as operable within the entertainment device 102C may be combined into fewer discrete elements or may be broken up into a larger number of discrete functional elements as a matter of design choice. Thus, the particular functional decomposition suggested by FIG. 7 is intended merely as exemplary of one possible functional decomposition of elements within the mobile communication device 106A.

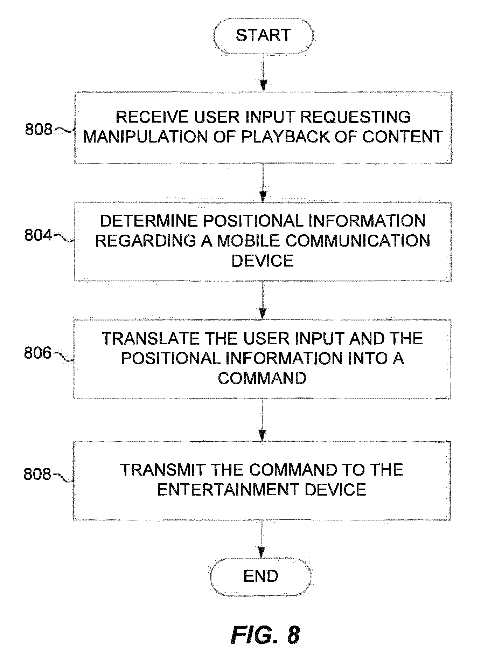

FIG. 8 illustrates an embodiment of a process for remotely operating an entertainment device. More particularly, FIG. 8 illustrates a process for manipulating the playback of video content by an entertainment device. The operations of the process of FIG. 8 are not all-inclusive, and may comprise other operations not illustrated for the sake of brevity.

The process includes receiving user input, through a mobile communication device, requesting manipulation of playback of content outputted for presentation by an entertainment device (operation 802). The request may include any function that the entertainment device is capable of performing to manipulate the playback of the content. Exemplary functions include changing channels, changing the volume, changing the brightness or contrast of the display device, enabling a picture-in-picture mode, performing trick play mode functions (e.g., fast forwarding, rewinding, pausing) and the like. For example, a user may utilize a keypad of the mobile communication device to input a new channel that they desire to watch or to pause the playback of recorded content. In some embodiments, the user input may include a selection of an interactive item within a menu presented by the entertainment device.

The process further includes determining positional information regarding the mobile communication device (operation 804). The positional information may be determined based on movements of the mobile communication device by a user. An accelerometer, gyroscope or other type of motion detector may be utilized to detect the motion and positional information of the mobile communication device.

The process further includes translating the user input and the positional information into a command compatible with the entertainment device (operation 806). The positional information and the user input may be translated into an IR code or other command transmitted through a wireless communication link between the entertainment device and the mobile communication device.

The process further includes transmitting the command to the entertainment device (operation 808). Responsive to receiving the command, the entertainment device utilizes the command to output a cursor on a menu and manipulate playback of the content on a display device communicatively coupled to the entertainment device. For example, the user may be viewing an EPG to select a new program to watch, and may use the remote control to position a cursor over a desired program. Responsive to moving the cursor over the desired program, the user may utilize an "enter" button or the like to select and initiate viewing of the program. In at least one embodiment, the entertainment device and the display device are integrated within a single unit. For example, the entertainment device may comprise a television receiver incorporated within a television.

Thus, through the operation of the process of FIG. 8, a user may manipulate playback of content by an entertainment device using a mobile communication device. Further, the process of FIG. 8 may optionally include the mobile communication device receiving data from the entertainment device and transmitting the data to an application server or another device or system. Thus, the mobile communication device may operate as a backchannel for the entertainment device, transmitting any type of information to the application server on behalf of the entertainment device.

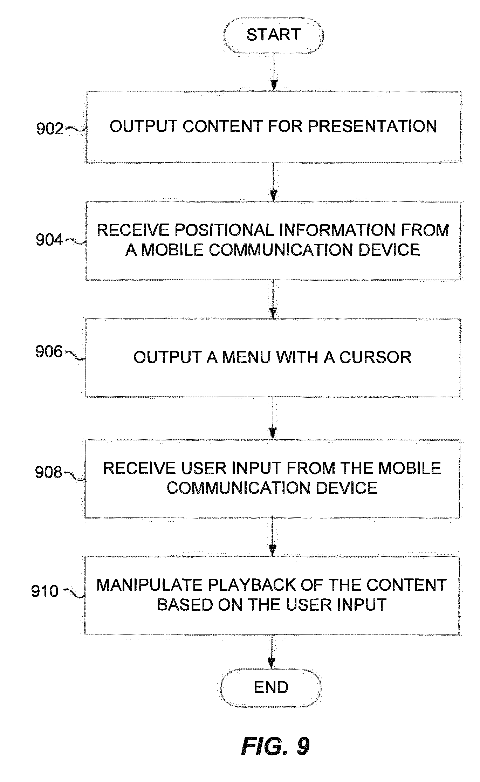

FIG. 9 illustrates an embodiment of a process for presenting content on a display device. More particularly, FIG. 9 illustrates a process for manipulating the playback of video content by an entertainment device based on positional information and user input received from a mobile communication device. The operations of the process of FIG. 9 are not all-inclusive, and may comprise other operations not illustrated for the sake of brevity.

The process includes outputting content for presentation on a display device (operation 902). The content presented may include any type of image or video data. If the display device is separate from the entertainment device outputting content (e.g., a set-top box), then the output signal may be transferred through a wired or wireless connection between the entertainment device and the display device.

The process further includes receiving positional information from a mobile communication device (operation 904). In at least one embodiment, the positional information received from the mobile communication device is processed by the entertainment device into a format appropriate for use by the entertainment device. For example, the entertainment device may receive signals that are converted into x, y coordinates of a coordinate system associated with the output of the entertainment device. In other embodiments, the mobile communication device may perform processing functions on the positional information to translate the positional information into a format compatible with the entertainment device. For example, the mobile communication device may measure signals indicating a direction of movement of the mobile communication device, and translate the signal into coordinates of the coordinate system of the entertainment device.

The process further includes outputting a menu with a cursor, for presentation on the display device (operation 906). A position of the cursor is derived based on the positional information. Thus, as the user moves the mobile communication device, the cursor displayed on screen will move to correspond with the position of the mobile communication device.

The process further includes receiving user input from the mobile communication device (operation 908). In at least one embodiment, the user input requests manipulation of playback of content presented by the entertainment device. A user may input information to the mobile communication device as described above in operation 802 of FIG. 8, and the entertainment device may receive the user input in a wireless transmission process similar to that discussed in operation 808 of FIG. 8. The process further includes manipulating playback of the content based on the user input (operation 808). Thus, the user can change the playback of content using the mobile communication device rather than a remote control associated with the entertainment device.

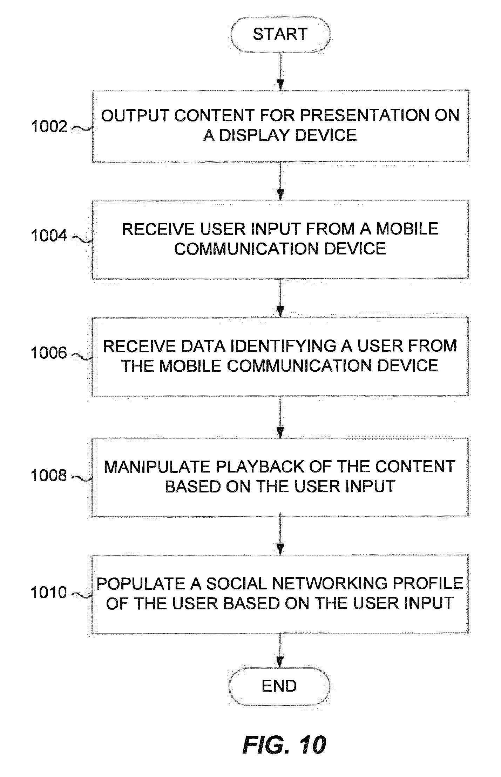

FIG. 10 illustrates an embodiment of a process for populating a social networking profile of a user based on viewing data. More particularly, FIG. 10 illustrates a process for populating a profile of the user when the user utilizes a mobile communication device to remotely operate an entertainment device. The operations of the process of FIG. 10 are not all-inclusive, and may comprise other operations not illustrated for the sake of brevity.

The process includes outputting content for presentation on a display device (operation 1002). Operation 1002 may be performed as described in operation 802 of FIG. 8. The process further includes receiving user input from a mobile communication device requesting manipulation of playback of content presented by an entertainment device (operation 1004). The user input may request any kind of manipulation of the content, such as channel changes, volume changes and pausing of live or recorded content.

The process further includes receiving data identifying a user from the mobile communication device (operation 1006). The identifying data may be any type of information that identifies the user individually or as a member of a group. For example, the data may identify the user as a member of a certain group or as having specific characteristics (e.g., an 18-40 year male). The identifying data may be collected using a variety of techniques. For example, the identifying data may be collected based on account information of the user of the mobile communication device. The identifying data may also be collected based on user responses to a survey or other questionnaire. In at least one embodiment, the identifying data may include a usemame or account number of the user on a social network. In some embodiments, the identifying data may be transmitted with each command from the mobile communication device. The identifying data may be transmitted with the first command during a viewing session or periodically during the viewing session. The process further includes manipulating playback of the content based on the user input (operation 1008). The content manipulation may be performed as described in operation 810 of FIG. 8.

The process further includes populating a social networking profile of the user based on the user input (operation 1010). For example, if the entertainment device determines that a user changed the channel to watch a program, then a message may be displayed to members of the user's buddy lists that they are presently watching that particular program. Thus, the friends may then tune to that program as well, or may know not to disturb the user during the time period of that particular program based on the message displayed in the buddy lists. The profile update message function may be performed automatically by the entertainment device, or may be performed responsive to input by the user. For example, the user may press a particular key of the mobile communication device to initiate the profile update function on the entertainment device.

In at least one embodiment, the entertainment device may communicate with an application server through a data network communicatively coupled to the entertainment device. For example, the entertainment device may be connected to a broadband network, and may transmit data to the application server through the broadband network. In other embodiments, the entertainment device may communicate with the application server through the mobile communication device. In other words, the mobile communication device receives data from the entertainment device, and further transmits the data to the application server through a wireless network.

In at least one embodiment, the entertainment device may tabulate the programs that the user frequently watches over a period of time, and responsively update the user's social networking profile based on the tabulated information. For example, the entertainment device may identify that a user watches every new episode of a particular program, and may responsively update the favorite shows section of the user's social networking profile to reflect this information.

In at least one embodiment, the tabulation information may be transmitted from the entertainment device to the mobile communication device after each episode or viewing session for storage and further updating. Thus, if a user utilizes multiple entertainment devices to regularly view video content, then the mobile communication device can provide the tabulation data to an entertainment device during each viewing session for updating based on the programming viewed by the user. Thus, the tabulated information is aggregated based on viewing across multiple entertainment devices during different viewing sessions.

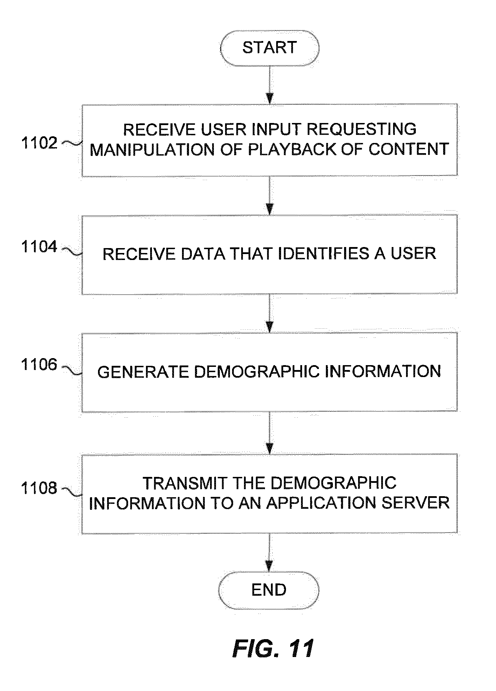

The data collected by the entertainment device may be utilized for other purposes, such as aggregating demographic information regarding television programming. FIG. 11 illustrates an embodiment of a process for collecting demographic information regarding video programming. The operations of the process of FIG. 11 are not all-inclusive, and may comprise other operations not illustrated for the sake of brevity.

The process includes receiving user input requesting manipulation of playback of content on an entertainment device (operation 1102). Operation 1102 may be performed similarly to operation 802 of FIG. 8. In at least one embodiment, the user input is received by a mobile communication device and transmitted to an entertainment device for processing. The process further includes receiving data that identifies a user (operation 1104). Operation 1104 may be performed as described in operation 1006 of FIG. 10.

The process further includes generating demographic information regarding the content based on the identifying data (operation 1106). It is to be appreciated that the demographic information may include any type of information regarding the user's viewing characteristics. For example, the demographic information may identify that a male between the ages of 18-40 watched a particular program on a particular date. The demographic information may include further granularity, such that the user watched the program until the commercial break, and then channel surfed for 2 minutes before switching back to the original program they were watching.

The process further includes transmitting the demographic information to an application server (operation 1108). In at least one embodiment, the entertainment device may transmit the demographic information using a data network communicatively coupled to the entertainment device. In other embodiments, the demographic information may be transmitted to the application server through the mobile communication device. Thus, the mobile communication device may operate as a backchannel for the demographic information. The application server may then utilize the demographic information to generate reports and other information regarding the video programming.

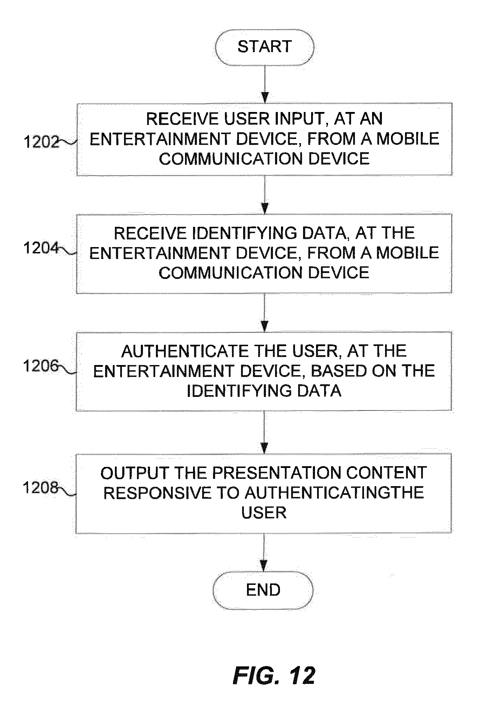

FIG. 12 illustrates an embodiment of a process for outputting presentation content by an entertainment device. More particularly, FIG. 12 illustrates a process for manipulating the playback of video content by an entertainment device based on a command inputted by a user into a mobile communication device. The operations of the process of FIG. 12 are not all-inclusive, and may comprise other operations not illustrated for the sake of brevity.

The process includes receiving user input, at the entertainment device, from a mobile communication device, the user input requesting output of presentation content by the entertainment device (operation 1202). In at least one embodiment, the user input may request output by the entertainment device of presentation content which is locked and only available upon authentication of the user. For example, the user input may request output of a specific channel of content. The user input may also request manipulation of the presentation content, e.g., pausing, fast-forwarding, reversing, volume changes and the like.

The process further includes receiving identifying data, at the entertainment device, from the mobile communication device (operation 1204). The identifying data identifies a user of the mobile communication device. The identifying data may be provided with the user input transmitted by the mobile communication device, or may be provided separately, e.g., responsive to a query from the entertainment device.

The process further includes authenticating the user, at the entertainment device, based on the identifying data (operation 1206). In at least one embodiment, the entertainment device compares the identifying data with locally stored information to authenticate the user. In other embodiments, the entertainment device may query an external source to authenticate the user. If the user input requests access to locked presentation content, then the entertainment device provides access to the locked presentation content responsive to authenticating the user. If the user is not authenticated, either because the identifying data provided is incorrect or they are not entitled access to the content, then the entertainment device may present some type of error message or other notification to the user.

The process further includes outputting the presentation content for presentation on a presentation device, based on the user input, responsive to authenticating the user (operation 1208). In at least one embodiment, the entertainment device is integrated with the presentation device. For example, the entertainment device may be a television. Thus, outputting the presentation content includes passing the content to a video controller that displays the content on screen. In other embodiments, the entertainment device may be separate from the entertainment device, e.g., a set-top box. Thus, outputting the content may include outputting a video signal for transmission to a separate presentation device.

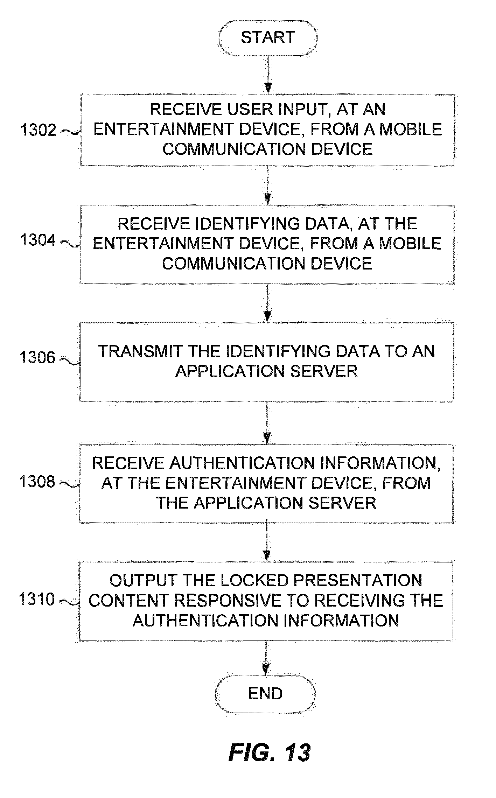

FIG. 13 illustrates an embodiment of a process for outputting locked presentation content by an entertainment device. The operations of the process of FIG. 13 are not all-inclusive, and may comprise other operations not illustrated for the sake of brevity.

The process includes receiving user input, at the entertainment device, from a mobile communication device (operation 1302). The user input requests presentation of locked presentation content available through the entertainment device. For example, the user input may request presentation of specific "locked" channels of a set-top box or may request presentation of a PPV or VOD video.

The process further includes receiving identifying data, at the entertainment device, from the mobile communication device (operation 1304). The identifying data identifies a user of the mobile communication device. In at least one embodiment, the user of the mobile communication device is also a registered user of the entertainment device. For example, the user may have an account on the entertainment device. In other embodiments, the user of the mobile communication device may not be a registered user of the entertainment device. For example, the user may be a guest or visitor in the home containing the entertainment device.

The process further includes transmitting the identifying data to an application server (operation 1306). The identifying data is transmitted to the application server for authentication of the user to access the locked presentation content. The entertainment device may transmit the identifying data to the application server through a communicatively coupled data network or may transmit the identifying data to the application server through the mobile communication device. For example, the entertainment device may generate a request, based on the user input and the identifying data, and transmit the request to the mobile communication device. The mobile communication device then transmits the data over a wireless network to the application server. Likewise, the mobile communication device receives data from the application server (e.g., a response to the authentication request) and transmits the data to the entertainment device for further processing.

The process further includes receiving, at the entertainment device, from the application server, authentication information allowing the user to access the locked presentation content (operation 1308). As described above, the entertainment device may communicate with the application server through a data network or may communicate with the application server via the mobile communication device. The application server may perform other functions when transmitting the authentication information to the entertainment device, such as billing the user for the access to the locked presentation content.

Responsive to receiving the authentication information, the entertainment device outputs the locked content for presentation on a presentation device (operation 1310). If the response from the server indicates that the user should not be allowed access to the presentation content, then the entertainment device may provide such notification to the user.

One advantage to the above described process is that a user of a mobile communication device may order PPV content at any location, regardless of whether the user is associated with the account of the entertainment device. For example, a DISH Network® subscriber may be visiting a friend and desire to watch a PPV video. The subscriber utilizes their mobile communication device to remotely control the entertainment device and order the PPV video. The entertainment device transmits a request to an application server and the application server authenticates the subscriber's request to order the video. The application server then transmits an authentication response to the entertainment device that indicates that the subscriber is entitled to access the video. The subscriber watches the movie and their account is billed for the PPV rather than the owner of the entertainment device. Thus, problems with guests ordering PPV videos are avoided because the guest is billed directly for the received content. Similarly, a guest could be billed for the content on their telephone bill without actually having a DISH Network® subscription. It will be appreciated that other techniques may be utilized to bill a user for accessing content based on the identifying data.

The identifying data may also be utilized to allow a user to make purchases through a home shopping program. For example, a user may see a product that they desire to purchase and may utilize their mobile communication device to control the entertainment device and make a purchase of the product. The entertainment device may use the identifying data to generate an order that is transmitted to the application server. Responsive to receiving the order, the application server bills the user and completes the order of the product.

Preferred features of the invention may be described by the following clauses:

1. A mobile communication device comprising:an input device that receives user input requesting manipulation of playback of content outputted for presentation by a television receiver;
a motion detector that determines positional information regarding the mobile communication device;
a processor communicatively coupled to the input device and communicatively coupled to the motion detector that translates the user input and the positional information into a command compatible with the television receiver; a wireless transmitter that transmits the command to the television receiver wherein the television receiver utilizes the command to output a cursor on a menu and manipulate playback of the content on a display device communicatively coupled to the television receiver; and
a wireless receiver that receives data from the television receiver, and wherein the wireless transmitter transmits the data to an application server.

2. The mobile communication device of clause 1, wherein the input device comprises a touch screen displaying a virtual remote control for the television receiver.

3. The mobile communication device of clause 2, wherein the processor downloads the virtual remote control from the television receiver.

4. The mobile communication device of clause 2, wherein the wireless receiver receives menu information from the television receiver regarding a menu outputted for presentation by the television receiver, and wherein the processor customizes the virtual remote control based on the menu information.

5. The mobile communication device of clause 1, wherein the mobile communication device transmits identifying data regarding a user to the television receiver in association with the command, and wherein the identifying data is utilized by the television receiver to generate demographic information.

6. A television receiver comprising:
a tuner that receives television programming from a programming source;
an interface module that wirelessly communicates with a mobile communication device and receives user input and positional information from the mobile communication device;
a processor communicatively coupled to the tuner that manipulates playback of the programming on a display device based on the user input, and that outputs a menu for presentation on the display device, generating a cursor of the menu based on the positional information; and
wherein the interface module transmits data to the mobile communication device, the mobile communication data further transmitting the data to an application server.

7. The television receiver of clause 6, wherein the interface module transmits a virtual remote to the mobile communication device for display by the mobile communication device.

8. The television receiver of clause 6, wherein the interface module receives identifying data regarding the user in association with the command from the mobile communication device, and wherein the processor generates demographic information regarding the television programming based on the identifying data.

9. The television receiver of clause 6, wherein the interface module receives identifying data regarding the user in association with the command from the mobile communication device, and wherein the processor utilizes the identifying data to populate a social networking profile of the user based on the user input.

10. A method for remotely operating a television receiver, the method comprising:
receiving user input, through a mobile communication device, requesting manipulation of playback of content outputted for presentation by a television receiver;
determining positional information regarding the mobile communication device;
translating the user input and the positional information into a command compatible with the television receiver;
transmitting the command to the television receiver, wherein the television receiver utilizes the command to output a cursor on a menu and manipulate playback of the content;
receiving data from the television receiver; and
transmitting the data to an application server.

11. The method of clause 10, further comprising: downloading a virtual remote control from the television receiver; and displaying the virtual remote control on a touch screen of the mobile communication device, wherein the user input is inputted using the touch screen.

12. The method of clause 11, further comprising:
receiving an updated virtual remote control from the television receiver, wherein the virtual remote control is updated to correspond with the menu outputted by the television receiver.

13. The method of clause 10, further comprising:
transmitting identifying data regarding a user to the television receiver in association with the command;
receiving demographic information generated by the television receiver based on the identifying data; and
transmitting the demographic information to an application server.

14. A method for presenting content on a display device, the method comprising:
outputting content for presentation on a display device;
receiving positional information from a mobile communication device;
outputting a menu with a cursor for presentation on the display device, wherein a position of the cursor is based on the positional information;
receiving user input from the mobile communication device;
manipulating playback of the content based on the user input; and
transmitting a virtual remote control to the mobile communication device, the virtual remote control presenting functions available to manipulate playback of the content.

15. The method of clause 14, further comprising: transmitting data to the mobile communication device, wherein the mobile communication device further transmits the data to an application server.

16. The method of clause 14, further comprising:
receiving identifying data regarding the user in association with the command from the mobile communication device;
generating demographic information regarding the television programming based on the identifying data; and
transmitting the demographic information to an application server.

17. A method for presenting content on a display device, the method comprising:
outputting content for presentation on a display device;
receiving user input from a mobile communication device;
receiving identifying data regarding a user in association with the user input from the mobile communication device;
manipulating playback of the content based on the user input; and populating a social networking profile of the user based on the user input.

18. The method of clause 17, wherein populating a social networking profile of the user based on the user input further comprises:
tabulating a list of television programs frequently watched by the user based on the data and the user input; and
populating the social networking profile with the list of the television programs.

19. The method of clause 17, wherein populating a social networking profile of the user based on the user input further comprises: populating the social networking profile with a message indicating that the user is presently watching television.

20. A method for outputting presentation content by an entertainment device, the method comprising:
receiving user input, at the entertainment device, from a mobile communication device, the user input requesting output of presentation content by the entertainment device;
receiving identifying data, at the entertainment device, from the mobile communication device, the identifying data regarding a user of the mobile communication device;
authenticating the user, at the entertainment device, based on the identifying data; and
outputting the presentation content for presentation on a presentation device, based on the user input, responsive to authenticating the user.

21. The method of clause 20, wherein authenticating the user further comprises:
authenticating the user, at the entertainment device, to access locked presentation content of the entertainment device, based on the identifying data.

22. The method of clause 21, wherein the locked presentation content comprises an on-demand video that is streamed to the entertainment device.

23. The method of clause 21, wherein the locked presentation content comprises a video stored on the entertainment device.

24. The method of clause 20, further comprising:
populating a social networking profile of the user based on the user input and the identifying data.

25. The method of clause 20, further comprising:
generating demographic information, regarding the presentation content, responsive to authenticating the user.

26. The method of clause 20, wherein transmitting the identifying data to the application server further comprises:
generating a request, at the entertainment device, based on the user input and the identifying data;
transmitting the request, from the entertainment device, to the mobile communication device; and
transmitting the request, from the mobile communication device, to the application server.

27. The method of clause 20, further comprising:
billing the user, for the access to the locked presentation content, based on the identifying data.

28. A method for outputting locked presentation content by an entertainment device, the method comprising:
receiving user input, at the entertainment device, from a mobile communication device, the user input requesting presentation of locked presentation content available through the entertainment device;
receiving identifying data, at the entertainment device, from the mobile communication device, the identifying data regarding a user of the mobile communication device;
transmitting the identifying data to an application server;
receiving, at the entertainment device, from the application server, authentication information allowing the user to access the locked presentation content; and
outputting the locked presentation content, from the entertainment device, for presentation on a presentation device, responsive to the entertainment device receiving the authentication information.

29. The method of clause 28, wherein the locked presentation content comprises an on-demand video that is streamed to the entertainment device.

30. The method of clause 28, wherein the locked presentation content comprises a video stored on the entertainment device.

31. The method of clause 28, wherein the locked presentation content comprises audio content stored on the entertainment device.

32. The method of clause 28, wherein transmitting the identifying data to the application server further comprises:
generating a request, at the entertainment device, based on the user input and the identifying data;
transmitting the request, from the entertainment device, to the mobile communication device; and
transmitting the request, from the mobile communication device, to the application server.

33. The method of clause 28, further comprising:
billing the user, for the access to the locked presentation content, based on the identifying data.

34. An entertainment device comprising:
an input module that receives locked presentation content from at least one content source;
an interface module that wirelessly communicates with a mobile communication device to receive user input and identifying data, the user input requesting access to the locked presentation content and the identifying data regarding a user of the mobile communication device;
a processor communicatively coupled to the input module and the interface module that authenticates the user based on the identifying data and that further outputs the presentation content for presentation on a presentation device, based on the user input, responsive to authenticating the user.

35. The entertainment device of clause 34, wherein the locked presentation content comprises an on-demand video that is streamed to the entertainment device.

36. The entertainment device of clause 34, wherein the locked presentation content comprises a video stored on the entertainment device.

37. The entertainment device of clause 34, wherein the interface module further receives a command, from the mobile communication device, the command instructing the processor to manipulate the output of the locked presentation content.

38. The entertainment device of clause 34, wherein the processor transmits a request to an application server, the request including information utilized by the application server to populate a social networking profile of the user, based on the user input and the identifying data.

39. The entertainment device of clause 34, wherein the processor generates demographic information, regarding the locked presentation content, based on the user input, responsive to authenticating the user.

40. A mobile communication device comprising:
an input device that receives user input requesting playback of locked presentation content available for output by an entertainment device;
a storage medium that stores identifying data regarding a user of the mobile communication device;
a processor communicatively coupled to the input device and communicatively coupled to the storage medium that translates the user input and the identifying data into a command compatible with the entertainment device; and
a wireless transmitter that transmits the command to the entertainment device wherein the entertainment device utilizes the command to authenticate the user and output the locked presentation content for presentation on a presentation device.

41. The mobile communication device of clause 40, further comprising:
a wireless receiver that receives a request from the entertainment device requesting authentication for the user to access the locked presentation content;
wherein the wireless transmitter transmits the request to an application server;
wherein the wireless receiver receives an authentication response from the application server responsive to the request; and
wherein the wireless transmitter transmits the authentication response to the entertainment device.

42. The mobile communication device of clause 40, further comprising:
a wireless receiver that receives a request from the entertainment device, the request including information utilized by an application server to populate a social networking profile of the user based on the user input;
wherein the wireless transmitter transmits the request to the application server.

43. The mobile communication device of clause 40, further comprising:
a wireless receiver that receives demographic information from the entertainment device, the demographic information generated by the entertainment device based on the command;
wherein the wireless transmitter transmits the demographic information to the application server.

Although specific embodiments were described herein, the scope of the invention is not limited to those specific embodiments. The scope of the invention is defined by the following claims and any equivalents therein.

## Claims

1. A method for outputting locked presentation content by an entertainment device (102C), the method comprising:
receiving user input (1202), at the entertainment device, from a mobile communication device (106E), the user input requesting output of locked presentation content by the entertainment device, the locked presentation content being accessible on a per-user basis;
receiving identifying data (1204), at the entertainment device, from the mobile communication device, the identifying data regarding a user of the mobile communication device;
authenticating the user (1206), at the entertainment device, to access the locked presentation content of the entertainment device, based on the identifying data; and
outputting the locked presentation content for presentation on a presentation device (1208), based on the user input, responsive to authenticating the user.

2. The method of claim 1, wherein the locked presentation content comprises a video stored on the entertainment device, audio stored on the entertainment device or an on-demand video that is streamed to the entertainment device.

3. The method of claim 1 or 2, further comprising:
populating a social networking profile of the user based on the user input and the identifying data.

4. The method of any preceding claim, further comprising:
generating demographic information, regarding the locked presentation content, responsive to authenticating the user.

5. The method of any preceding claim, wherein authenticating the user further comprises:
generating a request, at the entertainment device, based on the user input and the identifying data;
transmitting the request, from the entertainment device, to the mobile communication device; and
transmitting the request, from the mobile communication device, to the application server.

6. The method of any preceding claim, wherein authenticating the user further comprises:
transmitting the identifying data to an application server; and
receiving, at the entertainment device, from the application server, authentication information allowing the user to access the locked presentation content

7. An entertainment device (102C) comprising:
an input module (702) that receives locked presentation content from at least one content source, the locked presentation content being accessible on a per-user basis;
an interface module (704) configured to wirelessly communicate with a mobile communication device to receive user input and identifying data, the user input requesting access to the locked presentation content and the identifying data regarding a user of the mobile communication device;
a processor (706) communicatively coupled to the input module and the interface module and configured to authenticate the user based on the identifying data and to further output the locked presentation content for presentation on a presentation device, based on the user input, responsive to authenticating the user.

8. The entertainment device of claim 7, wherein the locked presentation content comprises an on-demand video that is streamed to the entertainment device, or wherein the locked presentation content comprises a video stored on the entertainment device.

9. The entertainment device of claim 7 or 8, wherein the interface module is further configured to receive a command, from the mobile communication device, in response to which the processor is configured to manipulate the output of the locked presentation content.

10. The entertainment device of any of claims 7 to 9, wherein the processor is configured to transmit a request to an application server, the request including information utilized by the application server to populate a social networking profile of the user, based on the user input and the identifying data.

11. The entertainment device of any of claims 7 to 10, wherein the processor is configured to generate demographic information, regarding the locked presentation content, based on the user input, responsive to authenticating the user.

12. A mobile communication device (106E) comprising:
an input device (602) configured to receive user input requesting playback of locked presentation content available for output by an entertainment device, the locked presentation content being accessible on a per-user basis;
a storage medium (604) configured to store identifying data regarding a user of the mobile communication device;
a processor (606) communicatively coupled to the input device and communicatively coupled to the storage medium, and configured to translate the user input and the identifying data into a command compatible with the entertainment device; and
a wireless transmitter (608) configured to transmit the command to the entertainment device wherein the entertainment device utilizes the command to authenticate the user and output the locked presentation content for presentation on a presentation device.

13. The mobile communication device of claim 12, further comprising:
a wireless receiver that receives a request from the entertainment device requesting authentication for the user to access the locked presentation content
wherein the wireless transmitter is configured to transmit the request to an application server; and
wherein the wireless receiver is configured to receive an authentication response from the application server responsive to the request; and
wherein the wireless transmitter is further configured to transmit the authentication response to the entertainment device.

14. The mobile communication device of claim 12 or 13, further comprising:
a wireless receiver that is configured to receive a request from the entertainment device, the request including information utilized by an application server to populate a social networking profile of the user based on the user input;
wherein the wireless transmitter is configured to transmit the request to the application server.

15. The mobile communication device of claim 12, 13 or 14, further comprising:
a wireless receiver configured to receive demographic information from the entertainment device, the demographic information generated by the entertainment device based on the command;
wherein the wireless transmitter is configured to transmit the demographic information to the application server.
